# FASCICULE DE BREVET EUROPEEN

(11) **EP 0 454 581 B1**
(45) Date de publication et mention de la délivrance du brevet: **25.01.1995**
(21) Numéro de dépôt: 91401097.0
(22) Date de dépôt: 25.04.1991
(51) Int. Cl.: G01N 17/00

(54) **Dispositif pour mesurer le potentiel d'électrode des armatures d'un béton immergé**
Vorrichtung zum Messen des Elektrodenpotentials von Bewehrungen in eingetauchtem Beton
Device for measuring the electrode potential of metallic reinforcement in immersed concrete

(30) Priorité: 26.04.1990 FR 9005340
(43) Date de publication de la demande: 30.10.1991
(73) Titulaire: ETAT FRANCAIS REPRESENTE PAR LE LABORATOIRE CENTRAL DES PONTS ET CHAUSSEES, 75732 Paris Cédex 15 (FR)
(72) Inventeur: Deeds, Patrick, F-77210 Avon (FR); Grimaldi, Gilbert, F-77820 Le Chatelet en Brie (FR); Raharinanaivo, André, F-75015 Paris (FR)
(74) Mandataire: Hasenrader, Hubert

(56) Documents cités:
- FR-A- 2 423 776
- GB-A- 2 164 286
- US-A- 4 800 165
- PATENT ABSTRACTS OF JAPAN vol. 11, no. 194 (P-588)(2641) 23 juin 1987,& JP-A-62 017650

## Description

La présente invention concerne un dispositif pour mesurer le potentiel d'électrode des armatures d'un ouvrage immergé en béton, du type comportant :
une électrode de référence destinée à être placée contre le parement en béton dudit ouvrage pendant la durée de la mesure, et
un voltmètre relié, d'une part, à ladite électrode et, d'autre part, aux armatures dudit ouvrage en béton.

Le béton armé est en général un excellent matériau qui permet d'obtenir des durées de vie des ouvrages de quarante ans et plus dans la mesure où l'intégrité du matériau est conservée. Pour ceci il faut veiller à ce que les spécifications concernant le type de ciment, son dosage, la compacité du béton, la qualité des agrégats, l'épaisseur d'enrobage des armatures, soient respectées.

Cependant la corrosion peut se développer dans des conditions particulièrement agressives pour le matériau, comme l'environnement marin, où la présence de défauts favorise la dégradation du béton et des armatures. Il s'avère donc nécessaire de pouvoir contrôler l'état de corrosion des armatures avec une méthodologie appropriée pour permettre un diagnostic aussi précis que possible.

Lorsque l'ouvrage en béton se trouve à l'air libre, la méthode de détection de la corrosion, utilisée couramment, consiste à faire des mesures de potentiel dit d'électrode. Le principe consiste à mesurer la différence de potentiel entre le réseau d'armatures et une électrode de référence posée sur le parement du béton. Un grand nombre de déterminations est nécessaire, suivant un maillage plus ou moins serré afin de permettre la localisation des zones à corrosion active. La méthode est souple d'emploi : appareillage simple, pouvant être connecté à un système d'acquisition de données, mesures rapides dans la plupart des cas. Les principaux problèmes rencontrés sont liés à l'état de siccité du béton. Une trop faible teneur du béton en eau rend les valeurs instables.

Lorsque le béton est dans l'air et moyennement sec, le potentiel d'électrode mesuré correspond au point à l'aplomb de l'électrode de référence. Lorsque le béton est immergé, le potentiel d'électrode mesuré correspond à une zone d'armature voisine de l'électrode, et, de plus, la présence d'eau plus ou moins aérée autour de l'électrode de référence perturbe les mesures et les rend peu fiables.

Le but de la présente invention est de proposer un dispositif du type mentionné ci-dessus qui permette d'obtenir des mesures fiables même lorsque l'électrode est disposée près d'une armature en béton immergé.

Le but est atteint selon l'invention par le fait que le dispositif comporte de plus :
une cloche entourant ladite électrode de référence et dont le bord délimitant l'ouverture est constitué d'un matériau déformable, ladite cloche étant destinée à être disposée contre le parement de l'ouvrage en béton, pendant au moins la durée de la mesure, de telle manière que son ouverture soit obturée de manière étanche par ledit parement, ladite cloche disposée ainsi contre ledit parement délimitant alors avec celui-ci une enceinte hermétique dans laquelle ladite électrode de référence est disposée en appui contre ledit parement,
des moyens pour introduire un gaz, notamment de l'air comprimé, dans ladite enceinte de façon à en chasser l'eau,
des moyens pour permettre l'évacuation de l'eau contenue dans ladite enceinte vers l'extérieur de celle-ci, sous l'action dudit gaz et
des moyens pour appliquer ladite électrode de référence située dans ladite enceinte contre ledit parement.

Grâce à cette structure, l'eau qui est éventuellement emprisonnée dans l'enceinte lors de la pose de la cloche contre le parement en béton, peut être chassée de ladite enceinte par de l'air comprimé avant de réaliser la mesure. On se retrouve alors dans les conditions idéales pour avoir des mesures fiables. Naturellement, la forme et le poids du dispositif permettent de le manipuler à la main et dans toutes les directions.

Avantageusement, le bord de la cloche qui délimite son ouverture est formé par un joint d'étanchéité souple. Il peut ainsi s'adapter sur la paroi en béton malgré les aspérités éventuelles de cette paroi ou sa forme géométrique.

Avantageusement, les moyens d'introduction d'air dans ladite enceinte comportent un tube qui débouche dans ladite enceinte et un robinet monté sur ledit tube et manoeuvrable manuellement. Le tube est relié de manière continue à une source d'air sous-pression.

Avantageusement, les moyens d'évacuation de l'eau de ladite enceinte comportent une ouverture prévue dans la paroi de ladite cloche et un clapet anti-retour monté dans ladite ouverture.

De manière à appliquer l'électrode de référence contre le parement en béton de l'ouvrage, l'électrode de référence est montée à l'extrémité libre d'un système télescopique à ressort lui-même solidaire de la cloche, le système télescopique étant disposé de telle manière que ladite électrode soit mobile dans une direction sensiblement parallèle à l'axe de la cloche, c'est-à-dire perpendiculaire au parement en béton.

De manière à faciliter le maniement du dispositif, la cloche est avantageusement disposée à l'extrémité d'un manche situé du côté opposé à l'ouverture de ladite cloche.

De préférence le manche est creux et renferme le câble électrique de l'électrode de référence et les moyens d'introduction de l'air comprimé. L'organe de manoeuvre du robinet est de préférence disposé sur la paroi externe du manche.

De manière à pouvoir s'assurer que l'électrode de référence est bien en appui sur la paroi en béton obturant l'ouverture de la cloche et que l'enceinte est vidée de son eau, une portion au moins de la paroi de la cloche est transparente. De plus, une lampe témoin est avantageusement associée à l'électrode et au système télescopique, cette lampe témoin étant destinée à s'allumer lorsque l'électrode de référence est au contact du parement en béton de l'ouvrage.

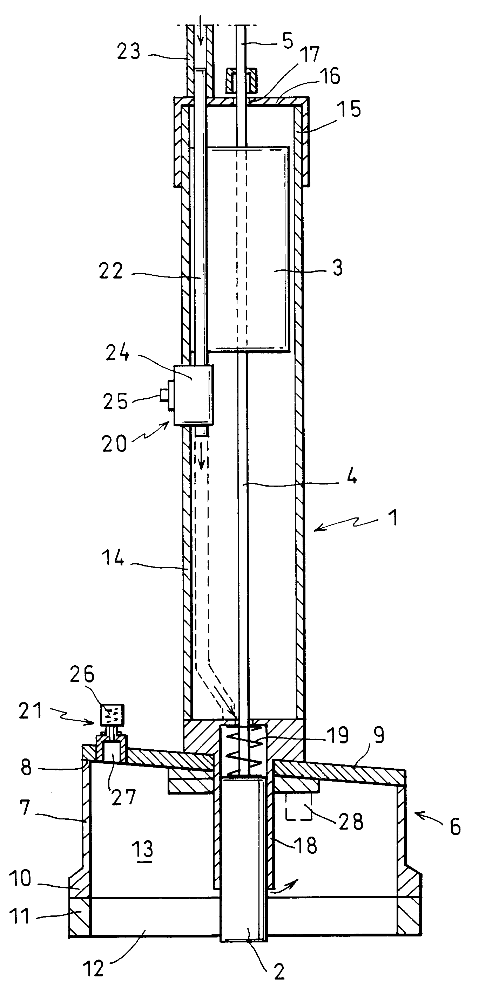

D'autres avantages et caractéristiques de l'invention ressortiront à la lecture d'un mode de réalisation préféré de l'invention décrit ci-après à titre d'exemple et en référence au dessin annexé dans lequel :
- la figure unique montre une coupe du dispositif de l'invention.

Le dispositif 1 pour mesurer le potentiel d'électrode des armatures d'un ouvrage en béton comporte de manière connue une électrode de référence 2 destinée à être appliquée contre un parement en béton dudit ouvrage, un voltmètre 3 relié, d'une part, à l'électrode de référence 2 par un câble électrique 4 et, d'autre part, aux armatures métalliques de l'ouvrage en béton par un deuxième câble électrique 5.

De manière à pouvoir utiliser le dispositif de mesure décrit ci-dessus pour mesurer le potentiel d'électrode des armatures d'un ouvrage en béton, totalement ou partiellement immergé, le dispositif 1 comporte en plus, une cloche 6 entourant l'électrode de référence 2. La cloche 6 peut être réalisée par exemple par un manchon cylindrique 7 dont une extrémité 8 est obturée par une plaque 9. L'autre extrémité 10 du manchon 7 est prolongée par un anneau 11 formant le bord de la cloche 6 qui délimite son ouverture 12.

L'anneau 11 est réalisé dans un matériau élastique, imperméable et souple, et il a une hauteur suffisante pour qu'il puisse former un joint d'étanchéité lorsque la cloche 6 est plaquée contre le parement en béton, l'anneau 11 étant au contact dudit parement et l'ouverture 12 étant totalement obturée par une portion de parement. L'anneau 11 épouse alors la forme de la portion annulaire du parement contre laquelle il est en appui, et l'enceinte 13 délimitée par la cloche 6 et le parement est isolée de façon étanche de l'extérieur de la cloche 6.

La cloche 6 est fixée à l'extrémité d'un manche creux 14 qui s'étend sur le côté de la cloche 6 opposé à son ouverture 12. Le manche creux 14 est fixé sur la partie centrale de la plaque 9 de manière étanche. L'autre extrémité 15 du manche 14 est obturée par un couvercle 16 muni d'un trou de passage étanche 17 pour le câble électrique 5. Le voltmètre 3 peut être disposé à l'intérieur du manche 14 et sa lecture peut être faite grâce à une fenêtre prévue sur la paroi du manche 14. Le câble électrique 4 reliant le voltmètre 3 à l'électrode de référence 2 est situé en grande partie dans le manche 14 et traverse la plaque 9.

L'électrode de référence 2 est montée sur un système télescopique 18 comportant un ressort 19 dont une extrémité est solidaire de l'ensemble constitué par le manche 14 et la plaque 9 et dont l'autre extrémité est solidaire de l'électrode de référence 2 de telle manière que celle-ci soit mobile selon une direction sensiblement parallèle à l'axe de la cloche 6, c'est-à-dire selon une direction perpendiculaire au plan de l'ouverture 12. Au repos, l'électrode de référence sort légèrement de l'enceinte 13, et lorsque la cloche 6 est plaquée contre le parement en béton, le ressort 19 exerce une force sur l'électrode de référence 2 de telle manière que celle-ci soit parfaitement en appui contre le parement en béton.

Le dispositif 1 comporte en plus des moyens 20 pour introduire un gaz comprimé dans l'enceinte 13 de façon à en chasser l'eau et des moyens 21 pour permettre l'évacuation de l'eau emprisonnée dans l'enceinte 13 vers l'extérieur du dispositif sous l'action de ce gaz. Ce gaz peut être avantageusement de l'air comprimé.

Les moyens 20 pour introduire de l'air comprimé dans l'enceinte 13 comportent essentiellement un tube 22 disposé dans le manche 14 et débouchant d'une part dans l'enceinte 13 et d'autre part sur le couvercle 16. Ce tube 22 peut être connecté de manière connue à une source d'air sous pression par un flexible 23. Un robinet 24 commandé par un organe de commande 25 situé à l'extérieur du manche 14 est prévu dans le circuit d'arrivée d'air. L'organe de commande 25 peut être avantageusement un bouton poussoir commandé par le pouce de l'opérateur qui tient le manche 14 à la main.

Les moyens 21 pour permettre l'évacuation de l'eau emprisonnée dans l'enceinte 13 vers l'extérieur sont constitués par un clapet anti-retour 26 monté sur une ouverture 27 prévue sur la plaque 9 au voisinage de son pourtour.

De manière à ce que l'opérateur puisse s'assurer que l'eau de l'enceinte 13 est chassée et que l'électrode de référence 2 est correctement en appui sur le parement en béton, la plaque 9 est avantageusement réalisée dans un matériau rigide et transparent et une lampe témoin 28 est connectée de manière connue au ressort 19 ou à l'électrode de référence 2 pour qu'elle puisse s'allumer lorsque le ressort 19 exerce une force suffisante sur l'électrode de référence 2.

Le fonctionnement du dispositif 1 se comprend aisément. L'opérateur, qui peut être un plongeur, tient le dispositif par le manche 14. Il plaque la cloche 6 contre le parement en béton. Lorsque la cloche 6 est bien plaquée, la lampe témoin 28 s'allume. L'opérateur appuie alors sur le bouton poussoir 25, ce qui entraîne une arrivée d'air dans l'enceinte 13. L'eau s'échappe de l'enceinte 13 par le clapet anti-retour 26. Lorsque de l'air sort par ce clapet, l'opérateur lâche le bouton poussoir 25. Il peut alors procéder à la lecture de la mesure. Il est à remarquer que le clapet anti-retour 26 empêche l'eau de pénétrer dans l'enceinte 13 par l'ouverture 27. La pression à l'intérieur de l'enceinte 13 n'est jamais supérieure à la pression extérieure. Elle peut à la rigueur être légèrement inférieure, la cloche 6 se maintenant alors contre la paroi en béton à la manière d'une ventouse. En utilisation, le clapet anti-retour 26 est positionné dans la partie inférieure de l'enceinte 13.

De nombreuses variantes peuvent être apportées au mode de réalisation décrit ci-dessus. En particulier, le voltmètre peut être connecté à un système de relevé et d'acquisition des mesures. Le voltmètre peut également être disposé à l'extérieur du dispositif. La cloche peut être maintenue contre le parement par un dispositif mécanique et non à la main. Ce qui importe c'est que les espaces délimités par le manche 14 et la cloche 6 soient parfaitement étanches, lors de l'utilisation du dispositif. L'ouvrage en béton mentionné dans la présente description peut être une armature fixe ou un ensemble déplaçable tel qu'une coque de bateau en béton.

## Revendications

1. Dispositif pour mesurer le potentiel d'électrode des armatures d'un ouvrage immergé en béton, du type comportant :
une électrode de référence (2) destinée à être placée contre le parement en béton dudit ouvrage pendant la durée de la mesure, et
un voltmètre (3) relié, d'une part, à ladite électrode de référence (2) et, d'autre part, aux armatures dudit ouvrage en béton,
caractérisé en ce qu'il comporte en plus :
une cloche (6) entourant ladite électrode de référence (2) et dont le bord délimitant l'ouverture (12) est constitué d'un matériau déformable, ladite cloche (6) étant destinée à être disposée contre le parement de l'ouvrage en béton, pendant au moins la durée de la mesure, de telle manière que son ouverture (12) soit obturée de manière étanche par ledit parement, ladite cloche (6) disposée ainsi contre ledit parement délimitant alors avec celui-ci une enceinte hermétique (13) dans laquelle ladite électrode de référence (2) est disposée en appui contre ledit parement,
des moyens (20) pour introduire un gaz, notamment de l'air comprimé, dans ladite enceinte (13) de façon à en chasser l'eau,
des moyens (21) pour permettre l'évacuation de l'eau contenue dans ladite enceinte (13) vers l'extérieur de celle-ci, sous l'action dudit gaz et
des moyens (18, 19) pour appliquer ladite électrode de référence (2) située dans ladite enceinte contre ledit parement.

2. Dispositif selon la revendication 1 caractérisé en ce que le bord délimitant l'ouverture (12) de ladite cloche (6) est formé par un joint d'étanchéité souple (11).

3. Dispositif selon l'une quelconque des revendications 1 et 2 caractérisé en ce que les moyens (20) d'introduction d'air comportent un tube (22) débouchant dans ladite enceinte (13) et un robinet (24) monté sur ledit tube (22) et manoeuvrable manuellement.

4. Dispositif selon l'une quelconque des revendications 1 à 3, caractérisé en ce que les moyens (21) d'évacuation de l'eau de ladite enceinte (13) comportent une ouverture (27) prévue dans la paroi de ladite cloche (6) et un clapet anti-retour (26) monté dans ladite ouverture (27).

5. Dispositif selon l'une quelconque des revendications 1 à 4, caractérisé en ce que les moyens d'application de ladite électrode de référence (2) contre le parement en béton de l'ouvrage comportent un système télescopique (18) muni d'un ressort (19) interposé entre ladite électrode (2) et ladite cloche (6), et disposé de telle manière que ladite électrode (2) soit mobile dans une direction sensiblement parallèle à l'axe de la cloche (6).

6. Dispositif selon l'une quelconque des revendications 1 à 5, caractérisé en ce que la cloche (6) est disposée à l'extrémité d'un manche (14) situé du côté opposé à l'ouverture (12) de ladite cloche (6).

7. Dispositif selon la revendication 6 caractérisé en ce que ledit manche (14) est creux et renferme le câble électrique (4) de l'électrode de référence (2) et les moyens (20) d'introduction de l'air comprimé.

8. Dispositif selon l'une quelconque des revendications 1 à 7, caractérisé en ce que la cloche (6) comporte au moins une portion de paroi transparente (9).

9. Dispositif selon la revendication 8 caractérisé en ce qu'il comporte une lampe témoin (28) associée à l'électrode de référence (2) et destinée à s'allumer lorsque l'électrode de référence (2) est au contact du parement en béton de l'ouvrage.

## Patentansprüche

1. Vorrichtung zum Messen des Elektrodenpotentials von Bewehrungen eines eingetauchten Betongewerkes, welche aufweist:
eine Referenzelektrode (2) zum Setzen gegen die Betonaußenseite des genannten Bauteils während der Dauer der Messung, und
ein Voltmeter (3), das einerseits mit der genannten Referenzelektrode (2) und andererseits mit den Bewehrungen des Betonbauteils verbunden ist,
dadurch gekennzeichnet, daß sie ferner aufweist:
eine die genannte Referenzelektrode (2) umgebende Glocke (6), deren die Öffnung (12) begrenzender Rand aus einem nachgiebigen Material besteht, wobei die genannte Glocke (6) zur Anordnung auf der Außenseite des Betonbauteils zumindest während der Meßdauer vorgesehen ist, derart, daß ihre Öffnung (12) durch die genannte Außenseite dicht verschlossen ist, so daß die so auf der genannten Außenseite angeordnete Glocke (6) mit ersterer einen hermetisch abgeschlossenen Raum (13) begrenzt, in welchem die Referenzelektrode (2) gegen die Außenseite gedrückt ist,
Mittel (20) zum Einleiten von Gas, insbesondere von Druckluft, in den genannten Raum (13), so daß das Wasser aus ihm ausgetrieben wird,
Mittel (21) zum Abführen des in dem Raum (13) enthaltenen Wassers auf seine Außenseite unter der Wirkung des genannten Gases, und
Mittel (18, 19) zum Anlegen der in dem genannten Raum angeordneten Referenzelektrode (2) gegen die genannte Außenseite.

2. Vorrichtung nach Anspruch 1, dadurch gekennzeichnet, daß der die Öffnung (12) der genannten Glocke (6) begrenzende Rand durch eine flexible Dichtung (11) gebildet ist.

3. Vorrichtung nach einem der Ansprüche 1 und 2, dadurch gekennzeichnet, daß die Mittel (20) zum Einleiten von Luft ein in den genannten Raum (13) mündendes Rohr (22) und ein am Rohr (22) befestigtes und manuell betätigbares Ventil (24) aufweisen.

4. Vorrichtung nach einem der Ansprüche 1 bis 3, dadurch gekennzeichnet, daß die Mittel (21) zum Abführen des Wassers aus dem genannten Raum (13) eine in der Wandung der genannten Glocke (6) vorgesehene Öffnung (27) und ein in der genannten Öffnung (27) angebrachtes Rückschlagventil (26) einschließen.

5. Vorrichtung nach einem der Ansprüche 1 bis 4, dadurch gekennzeichnet, daß die Mittel zum Anlegen der genannten Referenzelektrode (2) gegen die Betonaußenseite des Bauteils ein teleskopisches System (18) einschließen, das mit einer zwischen der genannten Elektrode (2) und der genannten Glocke (6) angeordneten Feder (19) versehen ist und das so angeordnet ist, daß die genannte Elektrode (2) in einer Richtung im wesentlichen parallel zur Achse der Glocke (6) beweglich ist.

6. Vorrichtung nach einem der Ansprüche 1 bis 5, dadurch gekennzeichnet, daß die Glocke (6) am der Öffnung (12) der Glocke (6) gegenüberliegenden Ende einer Haltestange (14) angeordnet ist.

7. Vorrichtung nach Anspruch 6, dadurch gekennzeichnet, daß die genannte Haltestange (14) hohl ist und die elektrische Leitung (4) der Referenzelektrode (2) und die Mittel (20) zum Einleiten von Druckluft enthält.

8. Vorrichtung nach einem der Ansprüche 1 bis 7, dadurch gekennzeichnet, daß die Glocke (6) zumindest einen transparenten Wandungsteil (9) aufweist.

9. Vorrichtung nach Anspruch 8, dadurch gekennzeichnet, daß sie eine mit der Referenzelektrode (2) verbundene Anzeigelampe (28) aufweist, die aufleuchtet, wenn die Referenzelektrode (2) in Berührung mit der Betonaußenseite des Bauteils ist.

## Claims

1. Device for measuring the electrode potential of the reinforcements in an immersed concrete structure, of the type comprising a reference electrode (2) intended to be placed against the concrete cladding of the said structure for the duration of the measurement and a voltmeter (3) connected, on the one hand, to the said reference electrode (2) and, on the other hand, to the reinforcements of the said concrete structure, characterised in that it moreover comprises a cover (6) surrounding the said reference electrode (2), the edge of which delimiting the opening (12) is made of a deformable material, the said cover (6) being intended to be placed against the cladding of the concrete structure for at least the duration of the measurement in such a manner that its opening (12) is closed in a sealed manner by the said cladding, the said cover (6) placed in this manner against the said cladding thereby delimiting together with the latter an airtight enclosure (13) in which the said reference electrode (2) bears against the said cladding, means (20) for introducing a gas, especially compressed air, into the said enclosure (13) so as to expel the water therefrom, means (21) for evacuating the water contained in the said enclosure (13) towards the exterior of the latter by the action of the said gas, and means (18, 19) for placing the said reference electrode (2) situated in the said enclosure against the said cladding.

2. Device according to claim 1, characterised in that the edge delimiting the opening (12) of the said cover (6) is formed by a flexible seal (11).

3. Device according to either of claims 1 and 2, characterised in that the means (20) for the introduction of air comprise a tube (22) opening into the said enclosure (13) and a valve (24) which is mounted on the said tube (22) and can be operated manually.

4. Device according to any one of claims 1 to 3, characterised in that the means (21) for evacuating the water from the said enclosure (13) comprise an opening (27) provided in the wall of the said cover (6) and a non-return valve (26) mounted in the said opening (27).

5. Device according to any one of claims 1 to 4, characterised in that the means for placing the said reference electrode (2) against the concrete cladding of the structure comprise a telescopic system (18) provided with a spring (19) interposed between the said electrode (2) and the said cover (6), and disposed in such a manner that the said electrode (2) can be moved in a direction substantially parallel to the axis of the cover (6).

6. Device according to any one of claims 1 to 5, characterised in that the cover (6) is disposed at the end of a handle (14) situated on the side opposite the opening (12) of the said cover (6).

7. Device according to claim 6, characterised in that the said handle (14) is hollow and contains the electric cable (4) of the reference electrode (2) and the means (20) for the introduction of the compressed air.

8. Device according to any one of claims 1 to 7, characterised in that the cover (6) comprises at least one transparent wall portion (9).

9. Device according to claim 8, characterised in that it comprises an indicator lamp (28) associated with the reference electrode (2) and intended to light when the reference electrode (2) is in contact with the concrete cladding of the structure.
